# EUROPÄISCHE PATENTSCHRIFT

(11) **EP 1 733 158 B1**
(45) Veröffentlichungstag und Bekanntmachung des Hinweises auf die Patenterteilung: **26.01.2011**
(21) Anmeldenummer: 05716316.4
(22) Anmeldetag: 23.03.2005
(51) Int. Cl.: F16H 61/28, F16H 61/04

(54) **SCHALTOPTIMIERUNGSVERFAHREN UND ENTSPRECHENDES STEUERGERÄT**
SHIFTING OPTIMIZATION METHOD AND CORRESPONDING CONTROL DEVICE
PROCEDE D'OPTIMISATION DE CHANGEMENT DE VITESSES ET DISPOSITIF DE COMMANDE CORRESPONDANT

(30) Priorität: 05.04.2004 DE 102004017794
(43) Veröffentlichungstag der Anmeldung: 20.12.2006
(73) Patentinhaber: GETRAG Getriebe- und Zahnradfabrik Hermann Hagenmeyer GmbH & Cie KG, 74199 Untergruppenbach (DE)
(72) Erfinder: DISCH-SIMON, Rainer, 78112 St. Georgen (DE); KALISCH, Tobias, 78050 Villingen-Schwenningen (DE)
(74) Vertreter: Steil, Christian
(86) Internationale Anmeldenummer: PCT/EP2005/003078
(87) Internationale Veröffentlichungsnummer: WO 2005/098269

(56) Entgegenhaltungen:
- EP-A- 0 310 387
- WO-A-02/32713
- DE-A1- 19 914 394
- US-A1- 2004 063 541

## Beschreibung

Die vorliegende Erfindung betrifft ein Verfahren zum Optimieren der Schaltabläufe eines Stufengetriebes, insbesondere eines automatisierten Stufengetriebes für Kraftfahrzeuge.

Bei automatisierten Schaltgetrieben (ASG) erfolgen die Betätigung von Schaltkupplungen des Stufengetriebes sowie die Betätigung einer vorgeschalteten Anfahr- und Trennkupplung über Aktuatoren. Die Aktuatoren können beispielsweise elektromotorisch oder fluidisch betriebene Aktuatoren sein. Die Aktuatoren werden koordiniert zueinander von einem Steuergerät angesteuert. Die Gangwechsel können sowohl von Hand ausgelöst werden als auch vollautomatisch gemäß einer übergeordneten Schaltstrategie erfolgen.

Die Schaltzeit ist insbesondere bei ASGs von besonderer Bedeutung, da ein Gangwechsel generell mit einer Zugkraftunterbrechung oder zumindest einer Zugkraftverringerung einhergeht. Ein Gangwechsel bei einem ASG beinhaltet das Auslegen eines Start-oder Quellganges und das Einlegen eines Zielganges.

Die zum Ein- und Auslegen der Gänge verwendeten Schaltkupplungen dienen in erster Linie zum Herstellen des Formschlusses, der die jeweilige Gangstufe einrichtet. Häufig sind die Schaltkupplungen als Synchronkupplungen ausgebildet, die als weitere Funktion die Drehzahlangleichung beim Einlegen einer Gangstufe besitzen. Bei einer Synchronkupplung ist der Synchronpunkt die Position eines Schaltgliedes der Synchronkupplung bei Beginn der Drehzahlangleichung. Die Synchronposition ist die Position bei erfolgter Drehzahlangleichung.

Aus der Druckschrift DE 101 10 898 A1 ist ein Verfahren zur Inbetriebnahme eines ASG bekannt. Dabei werden die zum Wählen und Schalten benötigten Getriebeparameter vor dem Einbau des Stufengetriebes in ein Fahrzeug ermittelt und in einem Steuergerät gespeichert. Dies soll den Vorteil haben, dass die zum späteren Betrieb erforderlichen Getriebeparameter vor dem Einbau unter Zuhilfenahme externer Sensoren ermittelt werden können, um Serienstreuungen zu kompensieren. Dies soll ferner zu einer hohen Genauigkeit bei der Erfassung der Synchronpositionen der einzelnen Gangstufen führen. Unter Getriebeparametern werden dabei die Geometriedaten der getriebeinternen Schaltelemente, die Position von im Getriebe vorhandenen Anschlägen etc. verstanden.

Zum Erfassen der Synchronposition einer Synchronkupplung wird bei dem bekannten Verfahren die Eingangswelle des Getriebes vor dessen Einbau durch einen externen Antrieb in Drehung versetzt. Die Synchronposition wird angefahren. Die Drehzahländerung der Eingangswelle wird überwacht. Das Erreichen des Synchronpunktes (dort Synchronposition genannt) wird bei einer Drehzahländerung festgestellt, die größer ist als ein vorbestimmter Schwellenwert. Dabei soll eine Schaltmuffe zum Einlegen der betroffenen Gangstufe langsam und mit kleiner Kraft durch den jeweiligen Aktuator betätigt werden.

Alternativ hierzu soll es auch möglich sein, die Eingangswelle des Getriebes mit einem Eingangsmoment zu beaufschlagen und das Abtriebsmoment zu überwachen. Das Erreichen des Synchronpunktes wird bei einer Abtriebsmomentänderung festgestellt, die größer ist als ein vorbestimmter Schwellenwert.

Aus der DE 103 12 400 A1 ist es ferner bekannt, die Spannung eines als Aktuator verwendeten Elektromotors beim Anfahren des Synchronpunktes so einzustellen, dass bei einem Anfahren des Synchronpunktes mit konstanter Geschwindigkeit die Synchronkraft genau getroffen wird.

Aus dem Dokument US 2004/063541 A1 ist ein gattungsgemäßes Verfahren zum Optimieren des Schaltablaufes bei einem in ein Kraftfahrzeug eingebauten Stufengetriebe bekannt, insbesondere bei einem automatisierten Schaltgetriebe, das mehrere Gangstufen aufweist, die mittels jeweiliger Schaltkupplungen ein- und auslegbar sind, wobei ein Toleranz- bzw. verschleißabhängiger Parameter einer Schaltkupplung des Stufengetriebes erfasst wird und wobei ein dem Parameter entsprechender Wegsollwert eines Schaltgliedes der Schaltkupplung eingestellt wird, der im Verlauf eines Schaltvorganges angefahren wird, und zwar in Abhängigkeit von dem Wert des erfassten Parameters, bzw. wobei ein dem Parameter entsprechendes Ereignis ausgelöst wird.

Weitere Schaltoptimierungsverfahren sind aus den Dokumenten DE 199 14 394 A1, EP 0 310 387 A sowie WO 02/32713 A bekannt.

Vor dem obigen Hintergrund ist es die Aufgabe der vorliegenden Erfindung, ein verbessertes Optimierungsverfahren für Schaltabläufe von Kraftfahrzeug-Stufengetrieben sowie ein damit betreibbares Steuergerät zu schaffen.

Diese Aufgabe wird durch ein Optimierungsverfahren gemäß Anspruch 1 sowie durch ein Steuergerät gemäß Anspruch 8 gelöst.

Generell wird diese Aufgabe durch ein Verfahren zum Optimieren des Schaltablaufes bei einem in ein Kraftfahrzeug eingebautem Stufengetriebe, insbesondere bei einem automatisierten Schaltgetriebe, gelöst, das mehrere Gangstufen aufweist, die mittels jeweiliger Schaltkupplungen ein- und auslegbar sind, mit den Schritten:
- Erfassen eines toleranz- und/oder verschleißabhängigen Parameters einer Schaltkupplung des Stufengetriebes, und
- Einstellen eines dem Parameter entsprechenden Weg-Sollwertes eines Schaltgliedes der Schaltkupplung, der im Verlauf eines Schaltvorganges angefahren wird, in Abhängigkeit von dem Wert des erfassten Parameters, und/oder Auslösen eines dem Parameter entsprechenden Ereignisses.

Durch das erfindungsgemäße Optimierungsverfahren ist es möglich, bei einem bereits in ein Kraftfahrzeug eingebauten Stufengetriebe die Schaltabläufe zu optimieren. Hierbei werden bestimmte Parameter des Schaltablaufes während der Betriebszeit des Kraftfahrzeuges erfasst, und es werden bestimmte Weg-Sollwerte der Schaltkupplung in Abhängigkeit von dem erfassten Parameterwert eingestellt oder Ereignisse auslöst.

Dabei kann das Optimierungsverfahren kontinuierlich während der Betriebszeit angewandt werden. Es ist jedoch auch möglich, das Optimierungsverfahren oder bestimmte Ausgestaltungen hiervon nur einmalig oder diskontinuierlich, also beispielsweise im Rahmen der üblichen Wartungsarbeiten, durchzuführen.

Das erfindungsgemäße Verfahren geht davon aus, dass die eingestellten Weg-Sollwerte adaptiv während der Betriebszeit des Kraftfahrzeuges eingestellt werden. Hierdurch lassen sich zeit-und komfortoptimierte Schaltvorgänge realisieren. Auch ist mittelbar eine Bestimmung des Verschleißes der Getriebekomponenten möglich.

Ein Schaltvorgang beinhaltet das Auslegen eines Startganges.

Obgleich das erfindungsgemäße Verfahren insbesondere bei ASGs Anwendung findet, ist es auch auf andere Getriebearten anwendbar, beispielsweise auf Doppelkupplungsgetriebe.

Das Schaltglied der Schaltkupplung ist ein bei einem Schaltvorgang bewegtes Glied, insbesondere eine Schaltmuffe oder ein damit gekoppeltes Glied wie eine Schaltgabel, eine Schaltstange, ein Aktuatorabtrieb o.Ä.

Das Auslösen eines dem Parameter entsprechenden Ereignisses kann beispielsweise im Schaltverlauf das Starten eines Programmmoduls sein.

Gemäß einer erfindungsgemäßen Ausführungsform ist der Parameter der Auslegepunkt beim Auslegen einer Gangstufe.

Hierdurch ist es möglich, ein dem Auslegepunkt entsprechendes Ereignis unmittelbar nach dem Erreichen des Auslegepunktes auszulösen. Im Stand der Technik wird der Gang beim Gangauslegen erst nach einer festen Wegdifferenz (Δ-Position) als ausgelegt gemeldet, wobei der Wert der Wegdifferenz alle Toleranzen berücksichtigt und relativ groß ist. Aus Sicherheitsgründen können bei einem Gangwechsel bestimmte Abläufe erst eingeleitet werden, wenn der Startgang als ausgelegt gemeldet ist. Erfindungsgemäß wird der Auslegepunkt bei einem in ein Kraftfahrzeug eingebauten Stufengetriebe adaptiv erfasst und kann demzufolge unmittelbar (bzw. mit einer sehr viel kleineren Wegdifferenz) zur Auslösung weiterer Ereignisse dienen (z.B. Meldung "Gang ausgelegt").

Gemäß einer alternativen erfindungsgemäßen Ausführungsform ist der Parameter der Hinterlegungspunkt beim Auslegen einer Gangstufe.

An den Schaltverzahnungen sind bekanntermaßen häufig so genannte Hinterlegungen vorgesehen, die in erster Linie dazu dienen, ein versehentliches Gangauslegen zu vermeiden. Die Hinterlegungen haben in Bezug auf den Auslegepunkt eine vorgegebene Entfernung. Demzufolge lässt sich der Auslegepunkt mittelbar über die Erfassung des Hinterlegungspunktes beim Auslegen einer Gangstufe ermitteln. Auch hierbei kann dann ein entsprechendes Ereignis bei Erreichen des Auslegepunktes ausgelöst werden, beispielsweise die Meldung "Gang ausgelegt" bzw. das Einleiten weiterer Schritte, die im Verlauf des Gangwechsels notwendig sind.

Von besonderem Vorteil ist es insgesamt, wenn der Parameter während der Lebensdauer des Kraftfahrzeuges immer aufs Neue erfasst wird.

Hierdurch kann der Schaltablauf in Abhängigkeit von der Veränderung des Parameters (z.B. auf Grund von Verschleiß) immer neu optimiert werden.

Von besonderem Vorteil ist es ferner, wenn der Parameter während der Fahrt des Kraftfahrzeuges erfasst wird.

Hierbei ist es möglich, nicht nur statische, sondern auch dynamische Begleitumstände zu berücksichtigen. Ferner ist es möglich, die Parametererfassung ständig während der Fahrt durchzuführen, um die Schaltabläufe zu optimieren.

Alternativ ist es natürlich auch möglich, den Parameter diskontinuierlich während der Lebensdauer des Fahrzeuges zu überwachen, beispielsweise bei regelmäßig anfallenden Wartungsarbeiten oder auch immer dann, wenn das Fahrzeug im Stillstand ist. Gemäß einer insgesamt bevorzugten Ausführungsform wird der Parameter erfasst, indem das Schaltglied bewegt wird und indem die Veränderung der Geschwindigkeit des Schaltgliedes erfasst wird.

Da der Parameter der Auslegepunkt ist, lässt sich dieser beispielsweise mittelbar über die Hinterlegungsposition erfassen. Sofern die Schaltverzahnung der Schaltkupplung mit einer Hinterlegung versehen ist, erfolgt eine Veränderung der Geschwindigkeit des Schaltgliedes, wenn dieses in Richtung neutral bewegt wird, und zwar an der Hinterlegungsposition. Voraussetzung hierfür ist, dass der auszulegende Gang unter Moment steht.

Gemäß einer weiteren bevorzugten Ausführungsform wird der Parameter erfasst, indem das Schaltglied bewegt wird und indem die Veränderung der Stellgröße eines Aktuators erfasst wird, der das Schaltglied betätigt.

Diese Ausführungsform entspricht dem Grunde nach der Art und Weise der Parametererfassung unter Benutzung der Veränderung der Geschwindigkeit des Schaltgliedes. Bei Erreichen des Synchronpunktes steigt der Strom (eines elektromotorischen Aktuators) bzw. der Druck (bei einem fluidischen Aktuator) auf Grund der Gegenkraft an. Dieser Anstieg der Stellgröße findet im Bereich des Synchronpunktes statt. Voraussetzung ist wiederum eine Differenzdrehzahl an der Schaltkupplung des Zielganges.

Bei dem Auslegen einer Gangstufe ist ein entsprechender kurzer Anstieg des Stromes bzw. Druckes dann festzustellen, wenn die Hinterlegung der Schaltkupplungsverzahnung erreicht wird. Somit lässt sich der Auslegepunkt mittelbar über die Hinterlegungsposition bestimmen.

Gemäß einer weiteren bevorzugten Ausführungsform wird der Parameter erfasst, indem das Schaltglied bewegt wird und indem die Eingangsdrehzahl des Stufengetriebes erfasst wird.

Da der Parameter der Auslegepunkt ist, wird dem auszulegenden Gang ein Moment aufgeprägt und das Schaltglied in Richtung neutral bewegt. Sobald der Formschluss gelöst wird, ergibt sich eine Änderung der Getriebeeingangsdrehzahl.

Entsprechend kann dies auch durch eine Veränderung der Stellgröße des Aktuators erfasst werden.

Das Detektieren der Getriebeparameter (z.B. des Synchronpunktes bzw. des Auslegepunktes) kann erfindungsgemäß zur adaptiven Einstellung eines entsprechenden Weg-Sollwertes verwendet werden. Der Weg-Sollwert berücksichtigt somit den Verschleiß der Synchronkupplung oder ähnliches. Alternativ kann die Erfassung des Parameters auch unmittelbar zum Auslösen eines entsprechenden Ereignisses verwendet werden, beispielsweise zum Einleiten weiterer Verfahrensschritte (nach der Art eines Software-Interrupts oder ähnliches).

Es versteht sich, dass der Parameter des Stufengetriebes vorzugsweise ein Wegparameter jeweiliger Schaltkupplungen des Stufengetriebes ist.

Ferner versteht sich, dass das erfindungsgemäße Optimierungsverfahren bzw. das erfindungsgemäße Steuergerät in gleichem Maße auch auf andere Getriebetypen anwendbar ist, insbesondere auch auf Doppelkupplungsgetriebe, bei denen ebenfalls Gangstufen formschlüssig durch jeweilige Schaltkupplungen eingerichtet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines automatisierten Schaltgetriebes, bei dem das erfindungsgemäße Optimie- rungsverfahren bzw. das erfindungsgemäße Steuergerät verwendet werden können;
- Fig. 2: Diagramme zur Erläuterung einer nicht zur Erfindung gehörenden Ausführungsform eines Optimierungsverfahrens zum Erfas- sen und Einstellen des Synchronpunktes einer Schalt- kupplung;
- Fig. 3: Diagramme zur Erläuterung einer zweiten nicht zur Erfindung gehörenden Ausführungsform eines Optimierungsverfahrens zur Erfas- sung und Einstellung des Synchronpunktes;
- Fig. 4: Diagramme zur Erläuterung einer dritten nicht zur Erfindung gehörenden Ausführungsform eines Optimierungsverfahrens zum Erfas- sen und Einstellen des Synchronpunktes bei einem Hoch- schaltvorgang;
- Fig. 5: eine Abwandlung der dritten Ausführungsform bei einer Rückschaltung;
- Fig. 6: Diagramme zur Erläuterung einer Ausführungsform des erfindungsgemäßen Optimierungsverfahrens zum Erfas- sen und Einstellen eines Auslegepunktes;
- Fig. 7: Diagramme zur Erläuterung einer weiteren Ausführungsform des erfindungsgemäßen Optimierungsverfahrens zum Erfas- sen und Einstellen des Auslegepunktes; und
- Fig. 8: Diagramme zur Erläuterung einer weiteren Ausführungs- form des erfindungsgemäßes Optimierungsverfahrens zum Erfassen und Einstellen des Auslegepunktes.

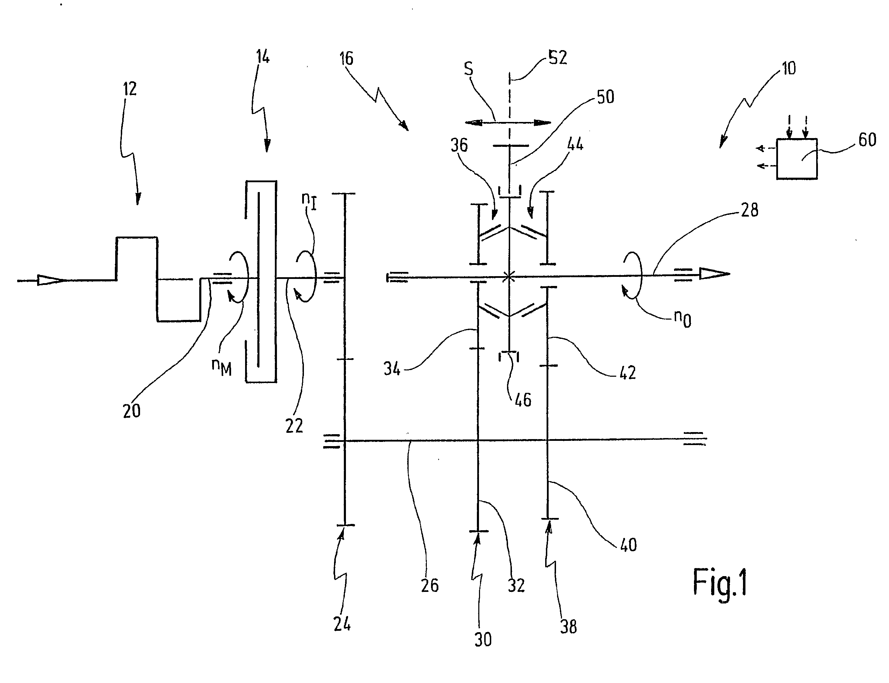

In Fig. 1 ist ein Antriebsstrang eines Kraftfahrzeuges generell mit 10 bezeichnet.

Der Antriebsstrang 10 weist einen Verbrennungsmotor 12, eine Anfahr- und Trennkupplung 14 sowie ein Stufengetriebe 16 auf.

Ein Eingangsglied der Trennkupplung 14 ist mit einer Motorabtriebswelle 20 verbunden. Die Drehzahl der Motorabtriebswelle 20 ist mit n_{M} bezeichnet. Ein Ausgangsglied der Trennkupplung 14 ist mit einer Getriebeeingangswelle 22 verbunden. Die Drehzahl der Getriebeeingangswelle ist mit n_{I} bezeichnet.

Das Stufengetriebe 16 weist getriebeeingangsseitig zunächst einen Konstanten-Radsatz 24 auf, der die Getriebeeingangswelle 22 mit einer Vorgelegewelle 26 verbindet.

Das Stufengetriebe 16 weist ferner eine Getriebeausgangswelle 28 auf, deren Drehzahl mit nₒ bezeichnet ist.

Ferner beinhaltet das Stufengetriebe 16 eine Mehrzahl von Radsätzen entsprechend einer Mehrzahl von Gangstufen, die durch das Stufengetriebe 16 eingerichtet werden können. Im vorliegenden Fall sind aus Gründen einer übersichtlichen Darstellung nur zwei Radsätze 30, 38 gezeigt, obgleich die Anzahl der Gangstufen bei typischen Antriebssträngen der gezeigten Art fünf, sechs, sieben oder mehr beträgt.

Der erste Radsatz 30 weist ein mit der Vorgelegewelle 26 verbundenes Festrad 32 und ein drehbar an der Getriebeausgangswelle 28 gelagertes Losrad 34 auf. Das Losrad 34 ist mittels einer ersten Schaltkupplung 36 (Synchronkupplung) mit der Getriebeausgangswelle 28 verbindbar.

Der zweite Radsatz 38 weist ein mit der Vorgelegewelle 26 verbundenes Festrad 40 und ein drehbar an der Getriebeausgangswelle 28 gelagertes zweites Losrad 42 auf. Das zweite Losrad 42 ist mittels einer zweiten Schaltkupplung 44 mit der Getriebeausgangswelle 28 verbindbar.

Die Schaltkupplungen 36, 44 sind als Schaltkupplungspaket integriert und mittels einer Schaltmuffe 46 betätigbar, die axial verschieblich ist.

Die Schaltmuffe 46 wird mittels eines Schaltgliedes 50 betätigt, bei dem es sich beispielsweise um eine Schaltgabel oder eine Schaltschwinge handeln kann.

Der dargestellte Antriebsstrang 10 ist ein automatisierter Antriebsstrang. Das Stufengetriebe 16 ist ein automatisiertes Schaltgetriebe. Demzufolge ist ein Steuergerät 60 vorgesehen, das einen Aktuator 52 ansteuert, der das Schaltglied 50 - und damit die Schaltmuffe 46 - automatisiert betätigt. Es versteht sich, dass das Steuergerät 60 in gleichem Maße dazu ausgelegt sein kann, auch die Trennkupplung 14 automatisiert zu betätigen. Ferner ist in der Regel eine übergeordnete Steuerung implementiert, die auch Parameter des Verbrennungsmotors 12 berücksichtigt bzw. beeinflusst.

Der Weg der Schaltmuffe 46 bzw. des Schaltgliedes 50 bzw. des Aktuators 52 ist in Fig. 1 schematisch mit s bezeichnet.

Es versteht sich, dass der dargestellte Getriebeaufbau lediglich beispielhaft ist und die Zusammenhänge bei dem erfindungsgemäßen Optimierungsverfahren veranschaulichen soll. Es versteht sich jedoch, dass das erfindungsgemäße Optimierungsverfahren in gleichem Maße auf andere Arten von Antriebssträngen anwendbar ist, bei denen Schaltkupplungen zum Ein- und Auslegen von Gangstufen verwendet werden, beispielsweise auf Doppelkupplungsgetriebe.

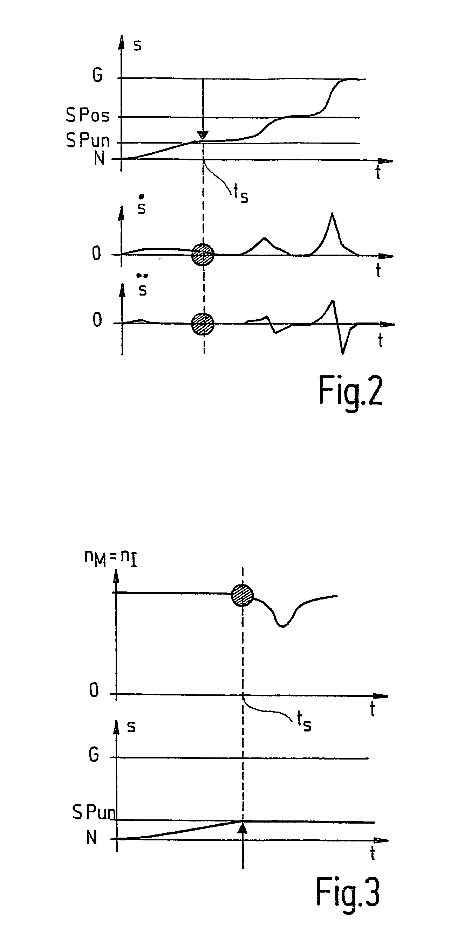

Fig. 2 zeigt Diagramme zur Erläuterung einer ersten nicht zur Erfindung gehörenden Ausführungsform eines Optimierungsverfahrens zum Erfassen und Einstellen des Synchronpunktes einer Schaltkupplung.

In der ersten Ausführungsform des erfindungsgemäßen Optimierungsverfahrens wird der Synchronpunkt durch Beobachtung der Bewegung der Schaltmuffe 46 (oder des Schaltgliedes 50 bzw. des Aktuatorabtriebs 52) erfasst.

In Fig. 2 ist der Weg s der Schaltmuffe 46 über der Zeit aufgetragen. Ferner sind dargestellt die erste Ableitung ṡ des Weges s über der Zeit und die zweite Ableitung s̈ des Weges s über der Zeit.

Bei dieser Ausführungsform des Optimierungsverfahrens wird die Schaltmuffe 46 des Zielganges langsam (mit minimaler Kraft) in Richtung Gang bewegt. Dabei ist über der Zielsynchronisation eine Differenzdrehzahl vorhanden.

Kommt die Schaltmuffe bei noch vorhandener Differenzdrehzahl zum Stehen bzw. wird ihre Geschwindigkeit kleiner, so entspricht die aktuelle Position der Schaltmuffe 46 dem Bereich des Synchronpunktes SPun. Der entsprechende Synchronpunkt-Zeitpunkt ist mit tₛ bezeichnet.

Bei SPos ist die Synchronposition dargestellt, also jene Position der Schaltmuffe, bei der die Drehzahlangleichung der Zielgangstufe erreicht ist. Bei G ist jene Position der Schaltmuffe 46 dargestellt, bei der der Formschluss erreicht und die Gangstufe eingelegt ist. Bei N ist der Neutralpunkt der zugehörigen Schaltkupplung dargestellt.

In dem Diagramm der Geschwindigkeit ṡ der Schaltmuffe 46 ist zu erkennen, dass diese bei dem Synchronpunkt SPun von einem relativ konstanten Wert abfällt. Dies ist ebenfalls in dem Diagramm betreffend die Beschleunigung s̈ zu erkennen.

Um über der Zielsynchronisation eine Differenzdrehzahl aufzuprägen, sind folgende Maßnahmen möglich:

Erstens, die Differenzdrehzahl kann durch einen Schaltwunsch ausgelöst werden und ist dann Folge der unterschiedlichen Übersetzung von Start- und Zielgang, wobei die Schaltung während der Fahrt erfolgen muss. Demzufolge kann die Detektierung des Synchronpunktes bei einem normalen Schaltvorgang während der Fahrt erfolgen.

Zweitens, die Differenzdrehzahl kann über die Kupplung erzeugt werden. Beispielsweise kann die Kupplung die Drehzahl des Antriebsmotors (Verbrennungsmotor, E-Motor, Gasturbine, ...) auf den Getriebeeingang 22 aufprägen und somit auch für eine Differenzdrehzahl über der Zielsynchronisation sorgen, unabhängig davon, ob das Kraftfahrzeug fährt oder nicht, also auch im Stillstand.

Drittens, die Differenzdrehzahl kann über den Startgang aufgeprägt werden. Lässt sich die Schaltmuffe 46 der Zielsynchronisation unabhängig von der Schaltmuffe des Startganges verfahren (sind also die Schaltkupplungen von Start- und Zielgang nicht Teil eines Kupplungspaketes), so lässt sich bei geöffneter Kupplung durch den eingelegten Gang eine Differenzdrehzahl über der Zielsynchronisation aufprägen. Es ist lediglich notwendig, dass irgendein Gang eingelegt ist und der Wagen sich noch bewegt, fährt/rollt.

Fig. 3 zeigt Diagramme zur Erläuterung einer zweiten nicht zur Erfindung gehörenden Ausführungsform eines Optimierungsverfahrens zur Erfassung und Einstellung des Synchronpunktes.

In Fig. 3 ist dargestellt die Getriebeeingangsdrehzahl n_{I} über der Zeit t. Bei dieser Ausführungsform ist die Trennkupplung 14 geschlossen, so dass die Getriebeeingangsdrehzahl n_{I} gleich der Motordrehzahl n_{M} ist.

Fig. 3 zeigt ferner den Weg s der Schaltmuffe des Zielganges über der Zeit.

Bei der zweiten Ausführungsform kann die Synchronpunktdetektierung im Stillstand erfolgen. Dabei ist zunächst die Kupplung zu schließen und der Verbrennungsmotor beispielsweise im Leerlauf zu betreiben. Es darf kein Gang eingelegt sein.

Nunmehr wird die Schaltmuffe 46 von Neutral N in Richtung hin zum Synchronpunkt SPun bewegt, wie es dem Diagramm in Fig. 3 zu entnehmen ist. Bei Erreichen des Synchronpunktes wird ein kurzfristiger Einbruch der Drehzahl des Verbrennungsmotors detektiert. Der Zeitpunkt tₛ des Einbruchs der Drehzahl des Verbrennungsmotors zeigt den Synchronpunkt SPun an. Dieser Punkt kann auch dazu benutzt werden, um die Schaltmuffe 46 anzuhalten, wie es dem Diagramm der Fig. 3 zu entnehmen ist (denn ansonsten würde ja bei geschlossener Trennkupplung 14 im Stillstand des Kraftfahrzeuges die Gangstufe eingelegt werden, was naturgemäß zu einem Abwürgen des Motors führen würde, oder zu einer Beschädigung der Schaltkupplung).

Es versteht sich, dass die Differenzdrehzahl hierbei auch durch einen Elektromotor erzeugt werden kann, wie er beispielsweise in Hybridfahrzeugen vorhanden ist, durch eine Gasturbine, durch einen Kurbelwellenstartergenerator, etc.

Anstelle der Detektierung über die Schaltmuffenposition oder die Getriebeeingangs- bzw. Motordrehzahl ist es auch möglich, den Synchronpunkt durch Beobachtung der Stellgröße des Aktuators 52 zu erfassen. Bei einem hydraulischen Stellzylinder kann die Stellgröße beispielsweise der Druck sein, bei einem Elektromotor beispielsweise der Strom.

Sofern eine Differenzdrehzahl über dem Zielgang vorhanden ist, kann man bei Erreichen des Synchronpunktes SPun eine kurzfristige Änderung der Stellgröße (z.B. Anstieg des Stromes bzw. des Druckes) feststellen, und zwar abhängig von der Art des Reglers bzw. der Steuerung. Dieser Anstieg ist eine Folge einer Änderung des Übertragungsverhaltens der Regelstrecke (Verfahren aus Neutral ohne Widerstand und Andrücken der Synchronringe).

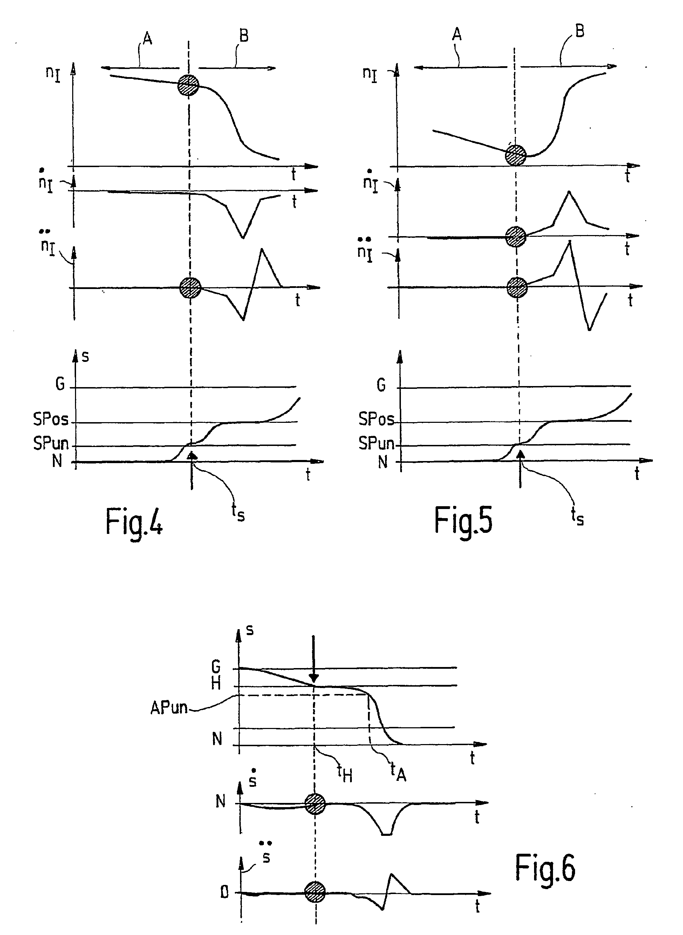

Fig. 4 zeigt Diagramme zur Erläuterung einer dritten nicht zur Erfindung gehörenden Ausführungsform eines Optimierungsverfahrens zum Erfassen und Einstellen des Synchronpunktes bei einem Hochschaltvorgang.

Wird ein Schaltvorgang während einer Fahrt des Kraftfahrzeuges durchgeführt, muss die Getriebeeingangsdrehzahl n_{I} vom Drehzahlniveau des Startganges auf das des Zielganges angepasst werden. Wenn der Startgang ausgelegt wurde, die Kupplung offen ist und der Synchronpunkt noch nicht erreicht ist, wird die Getriebeeingangsdrehzahl n_{I} durch das Schleppmoment des Getriebes bestimmt (Bereich A in Fig. 4).

In Fig. 4 sind übereinander dargestellt die Getriebeeingangsdrehzahl n_{I} über der Zeit bei einem Hochschaltvorgang, entsprechend der Gradient n_{I} der Getriebeeingangsdrehzahl und die Änderung n̈_{I} des Gradienten der Getriebeeingangsdrehzahl über der Zeit. Ferner ist in Fig. 4 dargestellt der Weg der Schaltmuffe s über der Zeit.

Man erkennt in den Diagrammen der Fig. 4, dass der Drehzahlgradient ṅ_{I} nach Erreichen des Synchronpunktes SPun steiler wird. Der Synchronpunkt SPun lässt sich in diesem Fall über die Änderung n̈ des Gradienten der Getriebeeingangsdrehzahl bestimmen (d.h. die zweite Ableitung n̈_{I} der Drehzahl n_{I}).

Fig. 5 zeigt Diagramme zur Erläuterung einer Abwandlung der dritten Ausführungsform eines Optimierungsverfahrens zum Erfassen und Einstellen des Synchronpunktes bei einem Rückschaltvorgang.

Die grundlegende Funktionsweise ist vergleichbar mit den Vorgängen beim Hochschalten.

Bei dem Rückschaltvorgang nimmt die Drehzahl n_{I} nach dem Auslegen des Startgangs stetig ab, bis die Drehzahl beim Erreichen des Synchronpunktes SPun nicht mehr fällt, sondern in Richtung der Zieldrehzahl ansteigt. Dabei wechselt das Vorzeichen des Drehzahlgradienten, d.h. der ersten Ableitung ṅ_{I} der Getriebeeingangsdrehzahl n_{I} von (-) auf (+). Der Synchronpunkt SPun liegt tatsächlich jedoch dort, wo der Gradient der Getriebeeingangsdrehzahl sich vom Wert her ändert, also dort, wo die zweite Ableitung n̈_{I} der Getriebeeingangsdrehzahl eine Wertänderung erfährt.

Bei einer dritten Ausführungsform gemäß den Figuren 4 und 5 lässt sich anstelle der Getriebeeingangsdrehzahl n_{I} auch die Differenzdrehzahl von Getriebeeingangsdrehzahl n_{I} und Getriebeausgangsdrehzahl nₒ verwenden.

Ziel der bislang beschriebenen Ausführungsform des Optimierungsverfahrens ist eine adaptive Erfassung und Speicherung des Synchronpunktes der Schaltkupplungen des Stufengetriebes 16, und zwar während der Lebensdauer des Kraftfahrzeuges. Wie dargestellt, kann dies kontinuierlich erfolgen, also beispielsweise bei jedem Schaltvorgang des Stufengetriebes. Alternativ ist es auch möglich, hierzu spezielle Verfahrensschritte durchzuführen, beispielsweise im Stillstand des Fahrzeuges (dies kann beispielsweise im Rahmen von Wartungsarbeiten oder Ähnlichem erfolgen).

Durch genaues kontinuierliches ("adaptives") Erfassen des Synchronpunktes ist es zu jedem Zeitpunkt während der Lebensdauer des Kraftfahrzeuges möglich, die Schaltmuffe 46 beim Einlegen des Zielganges jeweils schnell bis kurz vor den Synchronpunkt anzufahren und erst kurz vor Erreichen des Synchronpunktes auf eine langsamere Schaltmuffenbewegung umzuschalten. Hierdurch kann die Schaltzeit optimiert werden.

Ferner ist es durch Protokollierung des Synchronpunktes über die Lebensdauer des Kraftfahrzeuges möglich, den Verschleiß der jeweiligen Synchronbeläge zu erfassen.

Zusätzlich oder alternativ zu der Optimierung der Erfassung und Einstellung des Synchronpunktes ist es auch möglich, den Auslegepunkt des Startganges optimiert zu erfassen und einzustellen.

Während im Stand der Technik ein Gang aus Sicherheitsgründen häufig erst eine relativ große Wegdifferenz nach dem tatsächlichen Lösen des Formschlusses am Startgang als "ausgelegt" gemeldet wird, um weitere Verfahrensschritte im Rahmen eines Gangwechsels einzuleiten, wird der Auslegepunkt bei den nachfolgend erläuterten Verfahren während der Betriebszeit kontinuierlich erfasst. Demzufolge ist es möglich, eine Meldung "Gang ausgelegt" bereits unmittelbar (d.h. eine sehr kurze Wegstrecke nach dem tatsächlichen Lösen des Formschlusses) abzugeben, um somit die Schaltzeit noch weiter zu optimieren.

Fig. 6 zeigt Diagramme zur Erläuterung einer vierten Ausführungsform, die ein erfindungsgemäßes Optimierungsverfahren zum Erfassen und Einstellen des Auslegepunktes APun darstellt.

In Fig. 6 erfolgt das Erfassen und Einstellen des Auslegepunktes APun mittelbar durch Erfassung der Hinterlegungsposition H, und zwar anhand der Schaltmuffenbewegung.

Das Verfahren der vierten Ausführungsform entspricht der grundsätzlichen Art und Weise des Ablaufes der ersten Ausführungsform. Die vierte Ausführungsform kann unabhängig davon, ob eine Schaltung aktiv ist oder nicht, durchgeführt werden. Es ist lediglich notwendig, dass der Startgang (der eingelegte Gang) unter einem Moment steht.

Wird die Schaltmuffe des Startganges nun langsam (mit minimaler Kraft) in Richtung Neutral N bewegt, kommt sie auf Grund des Momentes, welches über dem eingelegten Gang ansteht, an der Hinterlegung zum Stehen. Diese ermittelte Hinterlegungsposition H ist die Berechnungsgrundlage für die Position des Auslegepunktes APun.

Es versteht sich, dass die vierte Ausführungsform nur dann verwendet werden kann, wenn an den Verzahnungen der Schaltkupplung des Startganges tatsächlich Hinterlegungen vorhanden sind, was jedoch bei Synchronkupplungen regelmäßig der Fall ist, um ein unbeabsichtigtes Lösen der eingelegten Gangstufe zu verhindern.

Bei der vierten Ausführungsform wird davon ausgegangen, dass ein Abstand zwischen einer Hinterlegungsposition H und dem Auslegepunkt APun eine feste Größe ist.

Die Aufprägung des Momentes über dem Startgang kann auf folgende Art und Weise erfolgen:

Erstens, das Moment kann über die Trennkupplung 14 aufgeprägt werden. Diese Art der Momentenaufprägung ist unabhängig vom Getriebetyp und ist ferner unabhängig davon, ob eine Schaltung aktiv ist oder nicht. Ferner ist diese Art der Momentenaufprägung sowohl dann möglich, wenn sich der Wagen im Stillstand befindet, als auch dann, wenn er fährt.

Zweitens, das Moment kann über den Zielgang aufgeprägt werden. Wenn sich die Schaltmuffe eines anderen Ganges unabhängig von der Schaltmuffe des Startganges verfahren lässt, so kann bei geöffneter Kupplung durch Aufprägen eines Synchronmomentes auf diesen anderen Gang ein Moment (eine Verspannung) über dem Startgang erreicht werden.

Drittens, ferner kann ein Moment durch jede andere "Momentenquelle" erfolgen, beispielsweise durch Elektromotoren bei Hybridfahrzeugen, durch Kombinationen von erstens und zweitens, etc.

Ferner ist die vierte Ausführungsform abwandelbar, indem anstelle der Schaltmuffenposition die Stellgröße des Aktuators des Startganges erfasst wird. Je nach Art der Schaltmuffenbetätigung wird man beim Erreichen der Hinterlegung H unter Moment zumindest kurzfristig eine Änderung der Stellgröße (z.B. Anstieg eines Stromes eines Elektromotors bzw. Anstieg eines Druckes in einem Hydraulikzylinder) feststellen können, und zwar abhängig von der Art des Reglers/der Steuerung. Dieser Anstieg ist eine Folge der Änderung des Übertragungsverhaltens der Regelstrecke.

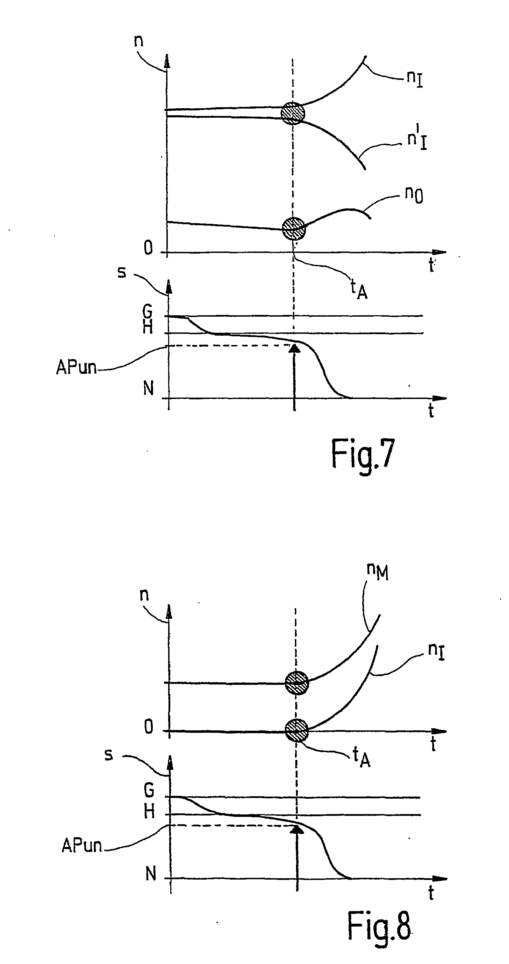

Fig. 7 zeigt Diagramme zur Erläuterung einer fünften Ausführungsform, die ein erfindungsgemäßes Optimierungsverfahren zum Erfassen und Einstellen des Auslegepunktes darstellt.

Fig. 7 zeigt generell eine Möglichkeit der Detektierung des Auslegepunktes APun während der Fahrt. Dabei wird der Startgang (z.B. bei einem Schaltwunsch) unter Beobachtung der Getriebeeingangs- und -ausgangsdrehzahl und/oder unter Beobachtung der Drehzahl des Verbrennungsmotors ausgelegt, wobei sich der Startgang während des gesamten Auslegevorganges unter einem Moment befinden muss. Der Startgang muss also, wie auch bei der vierten Ausführungsform, unter einem Moment stehen, also verspannt sein. Wird nun der Formschluss des Startganges gelöst, hat dies eine Änderung bei mindestens einer der zuvor genannten Drehzahlen zur Folge.

In Fig. 7 sind dem gemäß dargestellt die Getriebeeingangsdrehzahl n_{I} über der Zeit (bei einer Fahrsituation unter Zug oder bei einem angedrückten niedrigeren Gang), die Getriebeeingangsdrehzahl n'_{I} über der Zeit (z.B. bei einem angedrückten höheren Gang) sowie die Getriebeausgangsdrehzahl nₒ (z.B. bei einer Fahrsituation unter Schub).

Die Aufprägung des Momentes über dem Startgang kann folgendermaßen erreicht werden:

Erstens, das Moment kann über die Trennkupplung 14 aufgeprägt werden. Diese Art der Momentenaufprägung ist unabhängig vom Getriebetyp, muss aber bei fahrendem Wagen erfolgen und ist aufrechtzuerhalten, bis der Startgang ausgelegt meldet.

Zweitens, die Aufprägung des Momentes kann über den Zielgang erfolgen. Lässt sich die Schaltmuffe eines anderen Ganges unabhängig von der Schaltmuffe des eingelegten Startganges verfahren, so kann bei geöffneter Kupplung durch Aufprägen eines Synchronmomentes auf diesen anderen Gang ein Moment (eine Verspannung) über dem Startgang erreicht werden. Auch bei dieser Ausführungsform muss der Getriebeausgang eine Drehzahl aufweisen (das Fahrzeug muss fahren/rollen).

Drittens, das Moment kann durch jede andere Art von "Momentengenerator" erfolgen, beispielsweise durch einen Elektromotor in einem Hybridfahrzeug, durch einen Kurbelwellenstartergenerator, durch Kombination von erstens und zweitens, etc.

Fig. 8 zeigt Diagramme zur Erläuterung einer sechsten Ausführungsform, die ein erfindungsgemäßes Optimierungsverfahrens zum Erfassen und Einstellen des Auslegepunktes APun darstellt. Dabei erfolgt die Auslegepunkterfassung im Fahrzeugstillstand, beispielsweise auch bei Bandende des Fahrzeugherstellers.

Bei der sechsten Ausführungsform wird die Schaltmuffe des eingelegten Startganges bei getretener Fußbremse und einem durch die Kupplung aufgeprägten Getriebeeingangsmoment langsam in Richtung Neutralposition bewegt, bis der Formschluss des auszulegenden Startganges gelöst wird und die Getriebeeingangsdrehzahl sich wegdreht oder überhaupt eine Drehzahl messbar wird.

Wie die Drehzahl am Getriebeeingang, so erhöht sich auch die Drehzahl des Verbrennungsmotors (wegen der schleifenden Kupplung).

Demzufolge sind in Fig. 8 über der Zeit die Drehzahl n_{M} des Verbrennungsmotors sowie die Getriebeeingangsdrehzahl n_{I} dargestellt. Der Auslegepunkt APun wird bei einer Änderung einer dieser Drehzahlen erfasst.

In einer Abwandlung der sechsten Ausführungsform wird man anstelle einer Änderung der Drehzahlen n_{M} und/oder n_{I} den Auslegepunkt APun auch durch Beobachtung der Stellgröße des Aktuators 52 erfassen können.

Wird nämlich der Gang unter einer Vorspannung ausgelegt, so wird man eine Änderung der Stellgröße (z.B. ein Abfallen des Stromes eines Elektromotors bzw. ein Abfallen des Druckes eines hydraulischen Stellzylinder) feststellen können. Dieser Abfall ist Folge einer Änderung des Übertragungsverhaltens der Regelstrecke des auszulegenden Ganges unter Moment.

Es versteht sich, dass die verschiedenen Ausführungsformen zum Erfassen und Einstellen des Synchronpunktes auch miteinander kombiniert werden können. Gleichfalls können die verschiedenen Ausführungsformen zur Erfassung und Einstellung des Auslegepunktes miteinander kombiniert werden.

Ferner versteht sich, dass die jeweils erfassten Werte des Synchronpunktes SPun bzw. des Auslegepunktes APun in einem Steuergerät gespeichert werden und zur zeit- und sicherheitsoptimierten Ansteuerung der zugehörigen Aktuatoren 52 verwendet werden. Die verschiedenen Optimierungsverfahren werden folglich in einem Steuergerät gespeichert, wie es in Fig. 1 schematisch mit 60 dargestellt ist.

Insgesamt ergeben sich zeit- und komfortoptimierte Schaltabläufe von automatisierten Schaltgetrieben (oder anderen Arten von Stufengetrieben wie Doppelkupplungsgetrieben) über die gesamte Lebensdauer. Es sind reproduzierbarere Schaltungen bei gleicher Fahrsituation (von Schaltung zu Schaltung bzw. Fahrzeug zu Fahrzeug) möglich. Auch ergibt sich ein Sicherheitsgewinn durch eine Verschleißberücksichtigung der Getriebekomponenten.

## Patentansprüche

1. Verfahren zum Optimieren des Schaltablaufes bei einem in ein Kraftfahrzeug eingebauten Stufengetriebe (16), insbesondere bei einem automatisierten Schaltgetriebe (16), das mehrere Gangstufen aufweist, die mittels jeweiliger Schaltkupplungen (36, 44) ein- und auslegbar sind, mit den Schritten:
- Erfassen eines toleranz- und/oder verschleißabhängigen Parameters einer Schaltkupplung (36, 44) des Stufengetriebes (16),
- Einstellen eines dem Parameter entsprechenden Weg-Sollwertes (APun) eines Schaltgliedes (46, 50) der Schaltkupplung (36, 44), der im Verlauf eines Schaltvorganges angefahren wird, in Abhängigkeit von dem Wert des erfassten Parameters, und/oder Auslösen eines dem Parameter entsprechenden Ereignisses, **dadurch gekennzeichnet, daß** der Parameter der Auslegepunkt (APun) oder der Hinterlegungspunkt (H) beim Auslegen einer Gangstufe ist.

2. Optimierungsverfahren nach Anspruch 1, wobei der Parameter während der Lebensdauer des Kraftfahrzeugs immer aufs Neue erfasst wird, insbesondere um den Weg-Sollwert (APun) neu einzustellen.

3. Optimierungsverfahren nach einem der Ansprüche 1 bis 2, wobei der Parameter während der Fahrt des Kraftfahrzeuges erfasst wird.

4. Optimierungsverfahren nach einem der Ansprüche 1 bis 3, wobei der Parameter erfasst wird, indem das Schaltglied (46, 50) bewegt wird und indem die Veränderung (s̈) der Geschwindigkeit (ṡ) des Schaltgliedes (46, 50) erfasst wird.

5. Optimierungsverfahren nach einem der Ansprüche 1 bis 4, wobei der Parameter erfasst wird, indem das Schaltglied (46, 50) bewegt wird und indem die Veränderung der Stellgröße eines Aktuators (52) erfasst wird, der das Schaltglied (46, 50) betätigt.

6. Optimierungsverfahren nach einem der Ansprüche 1 bis 5, wobei der Parameter erfasst wird, indem das Schaltglied (46, 50) bewegt wird und indem die Eingangsdrehzahl (n_{I}) des Stufengetriebes (16) erfasst wird.

7. Steuergerät (60) für einen Antriebsstrang (10) eines Kraftfahrzeuges, wobei das Steuergerät (60) durch ein Computerprogramm betrieben wird, das das Optimierungsverfahrens gemäß einem der Ansprüche 1 bis 6 ausführt.

## Claims

1. Method for optimizing the gear-shifting sequence in a step-variable transmission (16) fitted in a motor vehicle, in particular in an automated shift transmission (16), which has a plurality of gears, which can be engaged and disengaged by means of respective shift clutches (36, 44), the method comprising the following steps:
- registering of a tolerance-dependent and/or wear-dependent parameter of a shift clutch (36, 44) of the step-variable transmission (16),
- adjustment of a set-point displacement value (APun) of a gear-shifting member (46, 50) of the shift clutch (36, 44), which corresponds to the parameter and which is approached in the course of a gear shift, as a function of the value of the parameter registered, and/or triggering of an event corresponding to the parameter,
**characterized in that** the parameter is the disengagement point (APun) or the backing point (H) when disengaging a gear.

2. Optimization method according to Claim 1, **characterized in that** the parameter is always reregistered throughout the service life of the motor vehicle, especially in order to readjust the set-point displacement value (APun).

3. Optimization method according to any one of Claims 1 to 2, **characterized in that** the parameter is registered while the vehicle is in motion.

4. Optimization method according to any one of Claims 1 to 3, **characterized in that** the parameter is registered by moving the gear-shifting member (46, 50) and by registering the variation (s̈) in the speed (s) of the gear-shifting member (46, 50).

5. Optimization method according to any one of Claims 1 to 4, **characterized in that** the parameter is registered by moving the gear-shifting member (46, 50) and by registering the variation in the control variable of an actuator (52), which operates the gear-shifting member (46, 50).

6. Optimization method according to any one of Claims 1 to 5, **characterized in that** the parameter is registered by moving the gear-shifting member (46, 50) and by registering the input speed (n_{I}) of the step-variable transmission (16).

7. Control unit (60) for a drivetrain (10) of a motor vehicle, the control unit (60) being operated by a computer program, which performs the optimization method according to any one of Claims 1 to 6.

## Revendications

1. Procédé pour optimiser le changement de vitesse dans une boîte de vitesses (16) installée dans un véhicule automobile, en particulier dans une boîte de vitesses automatisée (16), qui présente plusieurs rapports étagés pouvant être engagés et désengagés au moyen d'embrayages respectifs (36, 44), comprenant les étapes suivantes:
- détecter un paramètre, dépendant de la tolérance et/ou de l'usure, d'un embrayage (36, 44) de la boîte de vitesses (16),
- régler une valeur de consigne de course (APun), correspondant au paramètre, d'un organe d'embrayage (46, 50) de l'embrayage (36, 44), qui est approchée au cours d'une opération de changement de vitesse, en fonction de la valeur du paramètre détecté, et/ou déclencher un événement correspondant au paramètre,
**caractérisé en ce que**
- le paramètre est le point de désengagement (APun) ou le point d'enregistrement (H) lors du désengagement d'un rapport étagé.

2. Procédé d'optimisation selon la revendication 1, dans lequel on détecte toujours de nouveau le paramètre pendant la durée de vie du véhicule automobile, en particulier pour régler de nouveau la valeur de consigne de course (APun).

3. Procédé d'optimisation selon l'une quelconque des revendications 1 à 2, dans lequel on détecte le paramètre pendant que le véhicule automobile est en mouvement.

4. Procédé d'optimisation selon l'une quelconque des revendications 1 à 3, dans lequel on détecte le paramètre en déplaçant l'organe d'embrayage (46, 50) et en détectant la variation (*s̈*) de la vitesse (*ṡ*) de l'organe d'embrayage (46, 50).

5. Procédé d'optimisation selon l'une quelconque des revendications 1 à 4, dans lequel on détecte le paramètre en déplaçant l'organe d'embrayage (46, 50) et en détectant la variation de la grandeur de commande d'un actionneur (52), qui actionne l'organe d'embrayage (46, 50).

6. Procédé d'optimisation selon l'une quelconque des revendications 1 à 5, dans lequel on détecte le paramètre en déplaçant l'organe d'embrayage (46, 50) et en détectant la vitesse de rotation d'entrée (n_{I}) de la boîte de vitesses (16).

7. Appareil de commande (60) pour une ligne d'entraînement (10) d'un véhicule automobile, dans lequel l'appareil de commande (60) est entraîné par un programme d'ordinateur, qui exécute le procédé d'optimisation selon l'une quelconque des revendications 1 à 6.
